# EUROPÄISCHE PATENTSCHRIFT

(11) **EP 3 011 172 B1**
(45) Veröffentlichungstag und Bekanntmachung des Hinweises auf die Patenterteilung: **12.08.2020**
(21) Anmeldenummer: 14711444.1
(22) Anmeldetag: 17.03.2014
(51) Int. Cl.: F03D 80/40, F03D 1/06

(54) **ROTORBLATT EINER WINDENERGIEANLAGE, ENTEISUNGSSYSTEM UND VERFAHREN**
ROTOR BLADE OF A WIND TURBINE, DEICING SYSTEM AND METHOD
PALE DE ROTOR D'UNE ÉOLIENNE, SYSTÈME ET PROCÉDÉ DE DÉGIVRAGE

(30) Priorität: 19.06.2013 DE 102013211520
(43) Veröffentlichungstag der Anmeldung: 27.04.2016
(73) Patentinhaber: Senvion GmbH, 22297 Hamburg (DE)
(72) Erfinder: ERBSLÖH, Sascha, 24784 Westerrönfeld (DE)
(74) Vertreter: Wallinger Ricker Schlotter Tostmann
(86) Internationale Anmeldenummer: PCT/EP2014/000713
(87) Internationale Veröffentlichungsnummer: WO 2014/202164

(56) Entgegenhaltungen:
- DE-A1- 19 528 862
- DE-A1-102010 002 203
- DE-A1-102010 030 472
- DE-A1-102010 051 292
- DE-A1-102010 051 293
- DE-A1-102010 051 297
- DE-A1-102011 086 603

## Beschreibung

Die Erfindung betrifft ein Rotorblatt einer Windenergieanlage, wobei sich das Rotorblatt von einer Blattwurzel zu einer Blattspitze erstreckt und einen Hohlraum aufweist, der durch einen Steg, der in Längserstreckung des Rotorblattes angeordnet ist, und einen ersten Bereich des Rotorblattes umfassend eine Rotorblattnase von einem zweiten Bereich des Rotorblattes umfassend eine Rotorblatthinterkante abtrennt.

Die Erfindung betrifft ferner ein Enteisungssystem für eine Windenergieanlage. Zudem betrifft die Erfindung ein Verfahren zum Enteisen eines Rotorblattes einer Windenergieanlage.

Bei dem Betrieb von Windenergieanlagen gibt es an kalten Orten das Problem, dass die Rotorblätter vereisen, was zum einen die Aerodynamik und damit den Wirkungsgrad der Rotorblätter verschlechtert und zum anderen zu unerwünschten Belastungsproblemen führt.

Aus diesem Grund sind Systeme entwickelt worden, mittels der die Rotorblätter erwärmt werden können, um eine Enteisung vorzusehen.

DE 10 2010 030 472 A1 offenbart ein Rotorblatt einer Windenergieanlage mit einem ersten und einem zweiten innen im Rotorblatt verlaufenden Kanal zum Durchleiten eines Luftstrom. Es ist ferner ein Verfahren zum Enteisen eines Rotorblattes einer Windenergieanlage angegeben. Das Rotorblatt gemäß der DE 10 2010 030 472 A1 weist eine Trennvorrichtung auf, die die Kanäle voneinander trennt, so dass der erste Kanal an einer ersten Seite der Trennvorrichtung zur Druckseite des Rotorblattes angeordnet ist und der zweite Kanal an einer zweiten Seite der Trennvorrichtung zur Saugseite des Rotorblattes angeordnet ist. Das beschriebene Verfahren sieht vor, dass die Strömungsgeschwindigkeit des in dem ersten und in dem zweiten Kanal vorgesehenen Luftstroms wenigstens in Abschnitten des Rotorblattes vorgegeben wird.

Ein grundsätzliches Problem bei Warmluftsystemen ist, dass ein signifikanter Anteil der Wärmeenergie im blattwurzelnahen Bereich verlorengeht und dadurch eine Enteisung im Blattaußenbereich, insbesondere im Blattspitzenbereich, nur mit einem sehr hohen Energieaufwand und Massenströmen ermöglicht ist. Da das Material von Rotorblättern, nämlich üblicherweise glasfaserverstärkter Kunststoff, keine allzu hohe Temperatur aushält und damit die Temperatur der Heizluft limitiert ist und zudem Druckverluste überproportional mit dem Massestrom ansteigen, wurden zum Teil elektrische Systeme entwickelt. Diese haben allerdings Probleme mit dem Blitzschutzkonzept eines Rotorblattes. Zudem ist der Wartungsaufwand hierbei höher, da entsprechende Heizfolien typischerweise außen auf die Rotorblätter aufgeklebt werden und entsprechend der Witterung ausgesetzt sind.

Aus DE 10 2010 051 292 A1 ist ein Rotorblatt bekannt, welches eine Heizkammer und eine als Gebläseeinrichtung ausgestaltete Heizeinrichtung umfasst. Es sind mehrere miteinander verbundene Rohrleitungen vorgesehen, die einen Strömungsweg für einen Luftstrom bilden, wobei zumindest eine Rohrleitung mit der Heizkammer verbunden ist. In zumindest einer der Rohrleitungen ist eine Vielzahl von Öffnungen vorgesehen, durch die ein Teil des Luftstroms aus der Rohrleitung austreten kann.
Ein weiteres Rotorblatt ist aus DE 10 2010 051 297 A1 bekannt. Das Rotorblatt umfasst in Längsrichtung verlaufende Stege, die mit den Innenseiten einer saugseitigen und einer druckseitigen Rotorblattwandung verbunden sind. Im Bereich einer Blattspitze des Rotorblatts weist zumindest einer der Stege Öffnungen auf, durch die ein hinterkantenseitig des Stegs verlaufender Luftstrom in einen nasenkantenseitigen Bereich durch die Öffnung des Stegs überströmen kann. Die durch die Öffnungen gebildete Luftdurchtrittsfläche nimmt mit zunehmendem Abstand von der Blattwurzel ab.

Ferner ist aus DE 10 2010 051 293 A1 ein Rotorblatt bekannt, welches einen Mittelkanal umfasst, der sich im Inneren des Rotorblatts in dessen Längsrichtung erstreckt. Der Mittelkanal weist einen nasenkantenseitigen Kanal und einen hinterkantenseitigen Kanal auf, die durch eine Mittelwand voneinander getrennt sind. Das Rotorblatt umfasst ferner eine Gebläseeinrichtung, die einen Luftstrom von der Rotorblattwurzel zur Rotorblattspitze durch den Mittelkanal erzeugt. Eine Heizeinrichtung erwärmt den Luftstrom. Der Mittelkanal weist entlang der Längsrichtung eine Vielzahl von Luftaustrittsöffnungen und Lufteintrittsöffnungen auf, die zur Rotorblattnasenkante weisen.

Die Aufgabe der vorliegenden Erfindung ist es, ein effektives und wartungsarmes Enteisungssystem anzugeben, wobei insbesondere ein Rotorblatt einer Windenergieanlage und ein Verfahren zum Enteisen eines Rotorblattes einer Windenergieanlage angegeben werden soll, das eine effizientere Enteisung des Rotorblattes ermöglicht.

Gelöst wird diese Aufgabe durch ein Rotorblatt einer Windenergieanlage, wobei sich das Rotorblatt von einer Blattwurzel zu einer Blattspitze erstreckt und einen Hohlraum aufweist, in der ein Steg in Längserstreckung des Rotorblattes angeordnet ist, wobei der Steg einen ersten Bereich des Rotorblattes umfassend eine Rotorblattnase von einem zweiten Bereich des Rotorblattes umfassend eine Rotorblatthinterkante abtrennt, das dadurch weitergebildet ist, dass ein wärmeisolierter Kanal im ersten Bereich des Rotorblattes auf dem Steg angeordnet ist, um in einem Luftstrom Warmluft in Richtung der Blattspitze zu führen, wobei in dem Kanal Öffnungen vorgesehen sind, die dergestalt ausgebildet sind, um die Warmluft zur Rotorblattnase zu leiten, wobei eine Rückführung der Warmluft zur Blattwurzel hin im ersten Bereich des Rotorblattes erfolgt, wobei die Öffnungen im Kanal als Düsen ausgebildet sind.

Durch Vorsehen eines wärmeisolierten Kanals kann die warme Luft ohne große Wärmeverluste sehr weit in Richtung der Blattspitze gefördert werden. Zudem ist eine Anordnung des wärmeisolierten Kanals an dem Steg, insbesondere dem Steg, der zur Rotorblattnase angeordnet ist, für kurze Wege des Luftstromes von dem Kanal zu der Innenwand der Rotorblattnase förderlich. Auch hierdurch wird eine sehr effiziente und effektive Enteisung ermöglicht. Insbesondere ist mit dem ersten Bereich des Rotorblattes bzw. dem zweiten Bereich des Rotorblattes ein erster Bereich des Hohlraums bzw. Innenraums und ein zweiter Bereich des Hohlraums bzw. Innenraums des Rotorblattes zu verstehen.

Vorzugsweise ist ein geschlossener Luftstrom vorgesehen. Die Komponenten des Rotorblattes sind somit so umgestaltet, dass ein geschlossener Luftstrom ermöglicht ist. Durch Vorsehen eines geschlossenen Luftstromes ist eine sehr effektive Enteisung möglich, da keine Luft verlorengeht und insbesondere mögliche Restwärme der Luft vorhanden ist, die nicht erneut erwärmt werden muss, um als Warmluft wieder in das Rotorblatt eingelassen zu werden. Damit ist eine hohe Energieeffizienz gewährleistet.

Die Öffnungen im Kanal sind als Düsen ausgebildet, wodurch eine Geschwindigkeitserhöhung der Warmluft beim Austritt aus den Öffnungen erzielt wird und damit ein entsprechender Luftstrom unmittelbar auf die Innenwand der Rotorblattnase ermöglicht ist.

Vorzugsweise verjüngt sich der wärmeisolierte Kanal in Richtung der Blattspitze. Hierdurch wird eine Erhöhung der Geschwindigkeit erzielt bzw. ein Geschwindigkeitsverlust durch Abführen von Warmluft über die Öffnungen im Kanal kompensiert. Vorzugsweise geschieht die Verjüngung des Kanals wenigstens abschnittsweise stetig oder alternativ wenigstens abschnittsweise stufenförmig.

Vorzugsweise weist der wärmeisolierte Kanal an dessen Ende zur Blattspitze hin eine Öffnung auf, die zur Blattspitze hin zeigt und insbesondere als Düse ausgebildet ist. Hierdurch kann sehr effizient auch die Innenwand der Blattspitze mit Warmluft beaufschlagt werden und somit die Blattspitze enteist werden.

Vorzugsweise ist der erste Bereich als Vorderkasten ausgebildet. Der Vorderkasten umfasst dann den Steg, der zur Rotorblattnase hin angeordnet ist, sowie die Teile der Rotorblattschale, die die Rotorblattnase umfassen und bis zum Steg reichen.

Besonders bevorzugt ist es, wenn im ersten Bereich eine Luftstromleitvorrichtung vorgesehen ist, die den erwärmten Luftstrom an der Rotorblattnase entlang in Richtung der Blattwurzel leitet. Bei der Luftstromleitvorrichtung kann es sich um Leitbleche oder Leitwinkel handeln. Diese sind vorzugsweise auf der Innenseite bzw. der Innenwand der Rotorblattnase angeordnet. Vorzugsweise ist der Kanal als Rohr ausgebildet.

Der Kanal bzw. das Rohr ist wärmeisolierend bzw. wärmeisoliert ausgebildet, um große Wärmeverluste zu vermeiden. Unter einer wärmeisolierten Ausbildung bzw. einem wärmeisolierten Kanal bzw. Rohr ist ein Kanal bzw. ein Rohr zu verstehen, dessen Wandung eine entsprechende Wärmedämmung aufweist, die eine geringe Wärmeleitfähigkeit hat. Vorzugsweise ist die Wärmeleitfähigkeit unterhalb 1 W/(m^{∗}K), insbesondere unterhalb 0,8 W/(m^{∗}K), insbesondere unterhalb 0,4 W/(m^{∗}K). Insbesondere bevorzugt ist die Wärmeleitfähigkeit unterhalb 0,11 W/(m^{∗}K), insbesondere unterhalb 0,1 W/(m*K). Vorzugsweise ist die Dicke der Wandung des wärmeisolierten Kanals zwischen 1 cm und 10 cm, insbesondere zwischen 3 cm und 8 cm, insbesondere zwischen 4 cm und 6 cm. Vorzugsweise ist die Wandung des wärmeisolierten Kanals wenigstens abschnittsweise aus einem Dämmmaterial und einem Stabilisationsmaterial wie beispielsweise glasfaserverstärkter Kunststoff. Vorzugsweise ist eine Sandwichstruktur für die Wandung vorgesehen, wobei jeweils ein Stabilisationsmaterial ein Dämmmaterial einschließt. Es ergibt sich damit von innen nach außen die folgende Struktur: Stabilisationsmaterial / Dämmmaterial / Stabilisationsmaterial. Es können auch weitere Lagen bzw. Schichten vorgesehen sein, beispielsweise wie folgt: Stabilisationsmaterial / Dämmmaterial / Stabilisationsmaterial / Dämmmaterial / Stabilisationsmaterial. Als Dämmmaterial kommt vorzugsweise Polyurethan, Steinwolle, Glaswolle und/oder PVC-Schaum in Frage.

Der Kanal bzw. das Rohr ist vorzugsweise an dem Steg angeklebt. Dieses ist besonders bei der Produktion effizient, da das Rohr bzw. der Kanal während der Produktion am Steg außerhalb der Hauptform des Rotorblattes montiert werden kann und sich vorzugsweise somit die Formbelegungszeit nicht erhöht und die Form auch nicht verändert werden muss.

Als zusätzliche Maßnahme kann vorzugsweise vorgesehen sein, eine Vorrichtung zum Abdichten einer Undichtigkeit des wärmeisolierten Kanals vorzusehen. Diese Vorrichtung kann lanzenartig, insbesondere rohrförmig, ausgestaltet sein und dazu dienen, einen Kleber bzw. einen Harz in den Bereich einer Undichtigkeitsstelle des wärmeisolierten Kanals einzubringen. Es kann insbesondere vorzugsweise ein Injektionskopf vorgesehen sein, mittels dessen eine Injektion des Klebers bzw. des Harzes in die Undichtigkeitsstelle vorgesehen ist. Der Injektionskopf kann in Form einer Bürste ausgestaltet sein, wobei die Borsten der Bürste die Innenwandung des wärmeisolierten Kanals berühren und einen Transport des Klebers bzw. des Harzes zu der Undichtigkeit herbeiführen.

Insbesondere kann vorgesehen sein, Hohlborsten vorzusehen, durch die dann der Kleber bzw. das Harz von der als Lanze ausgebildeten Vorrichtung bzw. von dem Inneren dieser Vorrichtung durch die Borsten zu der inneren Oberfläche des wärmeisolierten Kanals geführt werden kann. Hierdurch kann ganz gezielt nur im Bereich einer Undichtigkeit entsprechendes Material eingebracht werden, um die Undichtigkeit zu beseitigen.

Es können auch weitere Reparaturverfahren Verwendung finden, wie beispielsweise das Zuführen von glasfaserverstärkten Kunststoffmatten in den Bereich der Undichtigkeit, wobei es sich hierzu vorzugsweise um schon mit Harz bzw. Kleber versehene bzw. getränkte Kunststoffmatten handelt, die dann auf die Undichtigkeitsstelle geklebt wird. Es können auch Klebetapes entsprechend aufgebracht werden oder besonders bevorzugt wenigstens von einer Seite mit Klebstoff versehene wärmeisolierende Materialen.

Die Aufgabe wird ferner durch ein Enteisungssystem für eine Windenergieanlage mit einem zuvor beschriebenen erfindungsgemäßen bzw. bevorzugten Rotorblatt gelöst. Das Enteisungssystem sieht einen Warmluftstrom bzw. einen erwärmten Luftstrom vor, um eine Enteisung zu ermöglichen.

Vorzugsweise ist beim Enteisungssystem eine Lufterwärmungsvorrichtung im Bereich einer Maschinengondel, einer Rotornabe oder der Blattwurzel vorgesehen. Die Lufterwärmungsvorrichtung umfasst vorzugsweise auch eine Luftstromerzeugungsvorrichtung. Insbesondere vorzugsweise ist die Lufterwärmungsvorrichtung als Heizlüfter ausgebildet.

Die Aufgabe wird ferner durch ein Verfahren zum Enteisen eines Rotorblattes einer Windenergieanlage gelöst, das die folgenden Verfahrensschritte aufweist:
- Führen eines erwärmten Luftstroms von einer Blattwurzel des Rotorblattes in Richtung einer Blattspitze, wobei
- der erwärmte Luftstrom in einem wärmeisolierten Kanal, der an einem Steg angeordnet ist, geführt wird, wobei der Steg einen ersten Bereich des Rotorblattes umfassend eine Rotorblattnase zu einem zweiten Bereich umfassend eine Rotorblatthinterkante abgrenzt, wobei

- der erwärmte Luftstrom wenigstens teilweise auf dem Weg zur Blattspitze aus dem Kanal abgezweigt wird und in Richtung der Rotorblattnase geführt wird, und
- anschließend der abgezweigte Luftstrom in einen Hohlraum, der zwischen der Rotorblattnase und dem Steg sowie dem Kanal vorgesehen ist, zurück zur Blattwurzel geführt wird,
wobei der abgezweigte Luftstrom an der Innenwand der Rotorblattnase zur Rotorblattwurzel zurückgeführt wird und die Geschwindigkeit des Luftstroms unter Nutzung eines Düseneffekts beim Abzweigen aus dem Kanal erhöht wird, um den Luftstrom unmittelbar an die Innenwand der Rotorblattnase zu leiten.

Die Begrifflichkeit bzw. das Merkmal in Richtung der Rotorblattnase umfasst die Bedeutung in Richtung auf die Innenwand der Rotorblattnase. Ein Teil des Luftstromes wird somit unmittelbar auf die Innenwand der Rotorblattnase geleitet.

Vorzugsweise wird der abgezweigte Luftstrom an der Innenwand der Rotorblattnase zur Blattwurzel zurückgeführt. Hierdurch kann auch Restwärme noch verwendet werden, um das Rotorblatt entsprechend an der Rotorblattnase zu enteisen.

Die Geschwindigkeit des Luftstroms wird beim Abzweigen aus dem Kanal erhöht. Hierbei wird ein Düseneffekt bzw. der Bernoulli-Effekt zunutze gemacht, um den Luftstrom unmittelbar an die Innenwand der Rotorblattnase zu leiten.

Vorzugsweise wird ein Teil des erwärmten Luftstroms auf die Innenwand der Blattspitze gerichtet und anschließend in dem Hohlraum, insbesondere an der Rotorblattnase, zur Blattwurzel zurückgeführt. Hierdurch kann sehr effizient auch die Blattspitze des Rotorblattes erwärmt werden.

Besonders bevorzugt ist ein geschlossener Luftstromkreislauf vorgesehen.

Es ist ferner bevorzugt, den Luftstrom mittels einer Luftstromleitvorrichtung an die Innenwand der Rotorblattnase und/oder die Innenwand der Rotorblattspitze zu leiten. Hierbei wird vorzugsweise ein Coanda-Effekt ausgenutzt. Die Leitvorrichtung kann beispielsweise so gebogen ausgebildet sein, dass sich der Warmluftstrom an die Luftstromleitvorrichtung anschmiegt und anschließend an die Innenwand der Rotorblattnase und/oder die Innenwand der Rotorblattspitze anschmiegt. Als Luftstromleitvorrichtung kann auch eine Leitwand oder ein Leitwinkel vorgesehen sein, der sich in Längserstreckung des Rotorblattes erstreckt und einen wesentlichen Teil des Warmluftstroms auf einen vorgesehenen Bereich der Innenwand der Rotorblattnase bzw. der Rotorblattspitze einschränkt.

Vorzugsweise wird nur ein Bereich von 40% bis 100%, insbesondere 50% bis 95%, der Rotorblattlänge gemessen von der Blattwurzel bis zur Blattspitze mit dem erwärmten Luftstrom unmittelbar aus dem Kanal beaufschlagt. Es sind somit vorzugsweise Öffnungen erst ab 40% gemessen von der Blattwurzel, vorzugsweise erst ab 50% gemessen von der Blattwurzel, im Kanal vorgesehen, aus denen dann Warmluft ausströmt und die Innenwand der Rotorblattnase mit Warmluft beaufschlagt. Eine bevorzugte Ausführung des erfindungsgemäßen Verfahrens sieht es hierbei vor, die Enteisung durch zusätzliche Maßnahmen des Betriebsführungssystems zu unterstützen. Bevorzugt sind hier ein Herausdrehen des Rotors aus dem Wind, beispielsweise durch Verfahren der Gondel auf dem Turm, eine Veränderung der Rotorposition, beispielsweise Blatt horizontal mit Nase nach unten oder Blattachse senkrecht nach unten ausrichten, eine Veränderung des Blattwinkels (Pitch) um 180° und/oder eine zusätzliche Vibrationsanregung zum Abschütteln angetauten Eises.

Vorzugsweise wird nur bei einem Rotorblatt das Verfahren zum Enteisen durchgeführt, das so am Rotor angeordnet ist, dass kein weiteres Rotorblatt unterhalb des zu enteisenden Rotorblattes angeordnet ist. Dies wird bei Windenergieanlagen mit Rotoren, die drei Rotorblätter aufweisen, üblicherweise immer dann sein, wenn das zu enteisende Rotorblatt in der unteren Rotorkreishälfte angeordnet ist. Hierdurch wird vermieden, dass abfallendes Eis ein weiteres Rotorblatt beschädigt.

Ferner vorzugsweise ist oder wird zum Enteisen eine Rotorblatthinterkante in Richtung gegen den einfallenden Wind gestellt. Die Rotorblatthinterkante des Rotorblattes, die in Richtung des einfallenden Windes gestellt wird, d.h. auf die der Wind zuerst auftrifft, führt dazu, dass keine Konvektion an der Rotorblattnase entsteht. Die Rotorblattnase ist dann in Lee und die Rotorblatthinterkante in Luv. Die Windströmung löst sich damit vor der Nase ab, so dass dort kein weiteres Eis entstehen kann, was die Enteisung der Rotorblattnase vereinfacht.

Vorzugsweise wird bei einem Defekt des wärmeisolierten Kanals der Kanal über eine Injektion von einem Harz oder einem Kleber an der defekten Stelle bzw. an einer Undichtigkeitsstelle repariert. Hierbei wird beispielsweise eine lanzenartige Vorrichtung, die insbesondere rohrförmig ausgeführt sein kann und einen Injektionskopf aufweist, verwendet. Der Injektionskopf wird in den Bereich einer Undichtigkeitsstelle bzw. beschädigten Stelle gebracht, so dass dort gezielt Kleber oder Harz eingebracht werden kann.

Besonders bevorzugt ist, wenn ein bürstenartiger Injektionskopf vorgesehen ist, der besonders bevorzugt mit dem gesamten Umfang der innenliegenden Oberfläche des wärmeisolierten Kanals in Wirkverbindung steht. Mittels des bürstenartigen Injektionskopfes kann sehr effizient Kleber an die Undichtigkeitsstelle gebracht werden.

Es kann auch vorgesehen sein, eine nur zu einer Seite vorgesehene Bürste beim Injektionskopf vorzusehen, so dass nur ein kleiner Bereich der Innenseite des wärmeisolierten Kanals mit einem Kleber oder einem Harz zur Zeit versehen werden kann, so dass gezielt bei wenig Materialverbrauch die Undichtigkeitsstelle abgedichtet werden kann.

Alternativ kann auch ein wärmeisolierendes Material, das auf einer Seite mit einem Kleber bzw. Klebstoffschicht versehen ist, auf die Undichtigkeitsstelle geklebt werden.

Es kann zudem auch ein Monitoring stattfinden, beispielsweise mittels eines Kameraroboters, der in den Bereich der Undichtigkeitsstelle verbracht wird, um zu Überprüfen, wie genau die Undichtigkeitsstelle beschaffen ist und welche Reparaturmaßnahme am sinnvollsten erscheint.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Schnittdarstellung in einer Draufsicht auf ein Rotorblatt,
- Fig. 2: einen schematischen Ausschnitt 25 aus der Fig. 1 in einer Draufsicht,
- Fig. 3: einen schematischen Querschnitt durch einen Teil eines erfindungsgemäßen Rotorblattes, und zwar quer zur Längserstreckung und
- Fig.4: einen Ausschnitt eines weiteren erfindungsgemäßen Rotorblattes in schematischer Darstellung.

In den Zeichnungen sind jeweils gleiche oder gleichartige Elemente und/oder Teile mit denselben Bezugsziffern versehen, so dass von einer erneuten Vorstellung jeweils abgesehen wird.

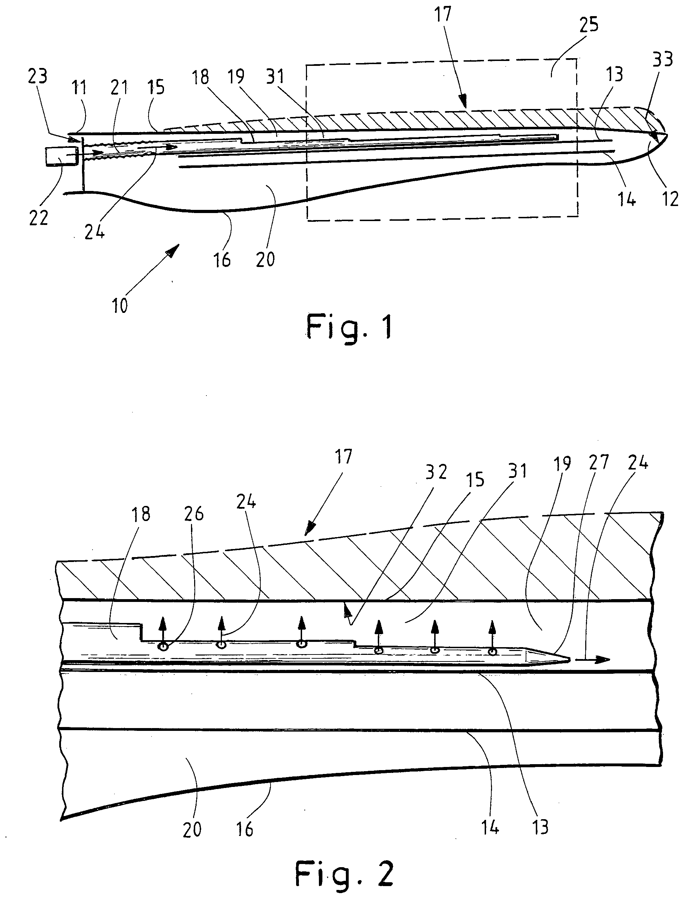

Fig. 1 zeigt schematisch in einer Schnittdarstellung und in einer Draufsicht ein erfindungsgemäßes Rotorblatt 10. Das Rotorblatt 10 weist eine Blattwurzel 11 auf, die üblicherweise an einer Rotornabe angebracht wird. Auf der gegenüberliegenden Seite der Blattwurzel 11 ist eine Blattspitze 12 vorgesehen. Die Längserstreckung eines Rotorblattes 10 kann beispielsweise bis zu 60 oder mehr Metern sein.

Es sind eine Rotorblattnase 15, also ein vorderer Bereich des Rotorblattes, d.h. der Bereich, der im bestimmungsgemäßen Gebrauch des Rotorblattes von Luft angeströmt wird, und eine Hinterkante 16, dargestellt. In dem Rotorblatt sind beispielsweise zwei Stege 13 und 14 angeordnet, wobei der Steg 13 der vordere Steg ist bzw. der Steg, der zur Rotorblattnase 15 angeordnet ist.

Ein Rotorblatt 10 ist üblicherweise hohl bzw. mit einem Hohlraum 31 ausgebildet. Erfindungsgemäß ist der Hohlraum 31 bzw. das Rotorblatt 10 in einen ersten Bereich 19 und in einen zweiten Bereich 20 aufgeteilt, wobei der erste Bereich 19 der Bereich zwischen dem vorderen Steg 13 und der Rotorblattnase 15 ist. In diesem Bereich ist erfindungsgemäß ein Kanal bzw. Rohr 18 vorgesehen, das sich im Wesentlichen von der Blattwurzel 11 bis im Wesentlichen zur Rotorblattspitze 12 erstreckt. In diesem Ausführungsbeispiel beginnt das Rohr in einem Abstand zur Blattwurzel 11 und endet in einem Abstand zur Blattspitze 12. Es existiert eine Verbindung des Rohrs 18 mit einem Heizlüfter 22 über ein Verbinderrohr 21, welches bevorzugt flexibel ausgeführt ist, um Toleranzen auszugleichen und Vibrationen und Geräuschübertragung zu entkoppeln.

Das Rohr 18 ist stufenweise verjüngt, und zwar in längsaxialer Richtung des Rotorblattes hin zur Blattspitze 12. Dies kann bevorzugt durch mit geeigneten Gummidichtungen ineinander geschobenen Rohren unterschiedlicher Durchmesser erfolgen, sodass gleichzeitig auch ein einfacher Wärmedehnungsausgleich bzw. axialer Bewegungsausgleich ermöglicht wird. An der Blattwurzel 11 ist ein Schott 23 vorgesehen, das den Hohlraum 31 gegenüber der Rotornabe abschließt. Durch das Schott 23 ist eine Durchführung vorgesehen, durch die das Verbinderrohr 21 geführt ist.

Mittels des Heizlüfters 22 wird Warmluft 24 durch das Rohr 18 geführt. Auf der Rotorblattnase ist Eis 17 angedeutet. Die Warmluft 24 wird durch das Rohr 18 und von dem Rohr 18 durch in Fig. 1 nicht dargestellte, aber in Fig. 2 dargestellte Öffnungen 26 auf die Innenwand der Rotorblattnase 32 gerichtet und am Ende des Rohres 18 in Richtung der Innenwand 33 der Blattspitze 12. Hierdurch kann effizient eine Enteisung vorgenommen werden.

Fig. 2 zeigt schematisch den Ausschnittbereich 25 aus Fig. 1. Hier sind die Öffnungen 26 und der entsprechende Warmluftstrom 24, der als Teilwarmluftstrom bezeichnet werden kann, dargestellt. Das Rohr 18 ist an dem Steg 13 angebracht. Die Anbringung kann beispielsweise durch Verklebung, insbesondere flächig oder mittels Klebelaschen, erfolgen oder im Falle der zum Längenausgleich ineinandergeschobenen Rohre mittels gummierter Schellen, die ihrerseits verklebt werden. In Fig. 2 ist vor allen Dingen auch gezeigt, dass am blattspitzenseitigen Ende des Rohrs 18 eine Düse 27 vorgesehen ist, um eine erhöhte Geschwindigkeit des Warmluftstroms 24 beim Austritt aus dem Rohr 18 zu ermöglichen. Somit wird auf effizientem Wege eine Enteisung im Blattspitzenbereich ermöglicht, wo der Querschnitt des Vorderkastens sehr eng wird.

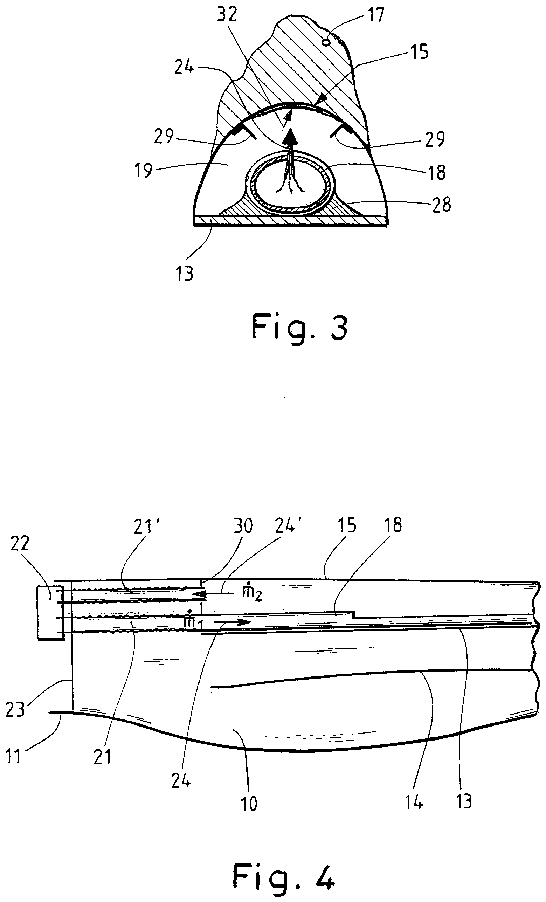

Fig. 3 zeigt schematisch in einer Querschnittsdarstellung quer zur Längsachse des Rotorblattes 10 einen Teil des Rotorblattes 10, nämlich des vorderen Teils des Rotorblattes 10, und insbesondere den Vorderkasten des Rotorblattes 10. Es ist die Rotorblattnase 15 dargestellt, auf der Eis 17 angeordnet ist. Der Kanal 18 ist mittels einer Verklebung 28 auf den Steg 13 aufgebracht. Es werden ferner der erste Bereich 19 des Hohlraums 31 und entsprechende Leitwinkel 29 dargestellt, die dafür sorgen, dass sich der Luftstrom im Wesentlichen zwischen den beiden Leitwinkeln 29 ausbildet, so dass dort im Wesentlichen die Erwärmung der Rotorblattnase 15 von der Innenwand 32 der Rotorblattnase 15 erfolgt.

Fig. 4 zeigt eine weitere Ausführungsform eines erfindungsgemäßen Rotorblattes 10, bei der zusätzlich noch für die Rückführung des Luftstroms 24' ein Verbindungsrohr 21' vorgesehen ist, das in dem Heizlüfter 22 endet. Zudem ist zur sicheren Rückführung des Luftstroms und damit kein Luftstrom verlorengeht ein Abschlusselement 30 vorgesehen, durch das der rückgeführte Luftstrom 24' geführt wird. Das Abschlusselement kann auch sehr einfach in Form einer flexiblen Folie, zum Beispiel eine LKW-Plane, ausgeführt sein. Hierdurch kann besonders effizient ein geschlossener Luftstromkreislauf erzielt werden. Im Bereich der Rückführung des Luftstroms 24' ist bevorzugt ein Gitter oder ähnliches vorzusehen, um die Ansaugung von Dreck oder Harzklumpen zu verhindern. In Fig. 4 sind die entsprechenden Luftmassenströme mit ṁ₁ und ṁ₂ dargestellt. Für einen geschlossenen Luftkreislauf gilt ṁ₁=ṁ₂.

Durch Vorsehen eines entsprechenden Enteisungssystems, das in einem Rotorblatt ein wärmeisoliertes Rohr hat, das mit abnehmendem Querschnitt im Vorderkasten des Rotorblattes und am vorderen Steg befestigt ist, ist eine besonders fertigungskompatible Ausgestaltung möglich, da das Rohr in der Produktion am Steg außerhalb der Hauptform montiert werden kann. Das Rohr führt Heizluft bis zur Blattspitze. Im Blattspitzenbereich ist eine Vielzahl von einfach gebohrten Öffnungen vorgesehen, die entsprechende Warmluftströme bzw. Warmluftjets erzeugen.

Im Rahmen der Erfindung beinhaltet der Begriff Blattaußenbereich insbesondere einen Bereich des Rotorblattes 10, der bei mehr als 50% des Radius liegt. Der Blattaußenbereich kann also 50% bis 100% der Rotorblattlänge gemessen von der Rotorblattwurzel ausmachen. Ein Teil des Blattaußenbereichs wird im Rahmen der Erfindung als Blattspitze definiert. Die Blattspitze ist bei 85% bis 100% der Rotorblattlänge definiert. Vorzugsweise umfasst die Rotorblattspitze einen Bereich von 90% bis 100% des Rotorblattes in Bezug auf die Rotorblattlänge gemessen von der Rotorblattwurzel.

Die Warmluftströme zeigen direkt auf die zu enteisende Vorderkante und transferieren die Wärmemenge entsprechend optimal dorthin. Entsprechende Leitwinkel leiten den Massestrom entlang der Vorderkante. Das Rohr verjüngt sich zur Blattspitze hin weiter und dient dort als Düse. Dieses erzeugt einen zusätzlichen Warmluftstrom, welcher mit entsprechender Wärmeenergie in die letzten Meter der Blattspitze transferiert werden kann, da dort kein entsprechender Bauraum mehr für ein Rohr vorhanden ist.

Vorzugsweise ist das Enteisungssystem bzw. Warmluftsystem geschlossen, d.h. Warmluft strömt im Blattwurzelbereich durch das isolierte Rohr in den Vorderkasten und wird über die Warmluftjets an die Vorderkante geführt. Dann strömt die Luft über den Vorderkasten zurück in die Blattwurzel, wo ein Heizlüfter positioniert ist.

Es ist zudem vorzugsweise vorgesehen, den Vorderkasten vollständig geschlossen vorzusehen. In diesem Fall dienen zwei Öffnungen, in denen entsprechende flexible Rohrleitungen bzw. Verbindungsrohre 21, 21' vorgesehen sind, zur Verbindung mit dem Heizlüfter. Das Heizsystem bzw. das Rotorblatt und das Verfahren zum Enteisen eines Rotorblattes sind sehr wartungsarm und haben vorzugsweise keine metallischen Komponenten außerhalb der Rotornabe. Metallische Komponenten können natürlich in Form von Blitzableitern vorgesehen sein und/oder in die Blattschale eingearbeitet sein, um die Wärme besser zum Eis zu führen. Damit wird Wärmeenergie optimal transferiert und das Eis kann vorzugsweise im kritischen Blattaußenbereich enteisen.

Gemäß der Erfindung ist im Vergleich zur DE 10 2010 030 472 A1 ein reduzierter Bauaufwand vorgesehen und zudem entstehen weniger Reibungsverluste durch die direktere Strömungsführung.

Trotz eines sehr einfachen Aufbaus ist eine sehr effiziente Funktionalität und damit Enteisung möglich. Durch Vorsehen entsprechender Anordnungen der Öffnungen, die vorgebbar sein können, ist es möglich, gewünschte Temperaturverläufe an den spezifischen Bereichen der Rotorblattnase, insbesondere im Blattaußenbereich, vorzusehen. Hierbei kann insbesondere auf Variationen in Aufbau und Stärke der Blattschale im Nasenbereich, die aufgrund einer Strukturoptimierung aus Festigkeitsgesichtspunkten vorgenommen wurden, Rücksicht genommen werden. Das Vereisungssystem bzw. das Rotorblatt kann durch Verschiebung oder Hinzufügung oder Weglassen von Öffnungen angepasst werden. Das System bzw. das Rotorblatt kann so optimiert werden, dass hauptsächlich der kritische Außenbereich des Rotorblattes, nämlich 50% bis 95% der Blattlänge, d.h. ab 50% bis 95% der Blattlänge gemessen von der Blattwurzel, enteist werden kann.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 10: Rotorblatt
- 11: Blattwurzel
- 12: Blattspitze
- 13: Steg
- 14: Steg
- 15: Rotorblattnase
- 16: Rotorblatthinterkante
- 17: Eis
- 18: Rohr
- 19: erster Bereich
- 20: zweiter Bereich
- 21, 21': Verbinderrohr
- 22: Heizlüfter
- 23: Schott
- 24, 24': Luftstrom
- 25: Ausschnittbereich
- 26: Öffnung
- 27: Düse
- 28: Verklebung
- 29: Leitwinkel
- 30: Abschlusselement
- 31: Hohlraum
- 32: Innenwand
- 33: Innenwand

## Patentansprüche

1. Rotorblatt (10) einer Windenergieanlage, wobei sich das Rotorblatt (10) von einer Blattwurzel (11) zu einer Blattspitze (12) erstreckt und einen Hohlraum (31) aufweist, in dem ein Steg (13) in Längserstreckung des Rotorblattes (10) angeordnet ist, wobei der Steg (13) einen ersten Bereich (19) des Rotorblattes (10) umfassend eine Rotorblattnase (15) von einem zweiten Bereich (20) des Rotorblattes (10) umfassend eine Rotorblatthinterkante (16) abtrennt, **dadurch gekennzeichnet, dass** ein wärmeisolierter Kanal (18) im ersten Bereich (19) des Rotorblattes (10) auf dem Steg (13) angeordnet ist, um in einem Luftstrom (24, 24') Warmluft (24) in Richtung der Blattspitze (12) zu führen, wobei in dem Kanal (18) Öffnungen (26) vorgesehen sind, die dergestalt ausgebildet sind, die Warmluft (24) zur Rotorblattnase (15) zu leiten, wobei eine Rückführung der Warmluft zur Blattwurzel (11) hin im ersten Bereich (19) des Rotorblattes (10) erfolgt, wobei die Öffnungen (26) im Kanal (18) als Düsen ausgebildet sind, und wobei der wärmeisolierte Kanal (18) an dessen Ende zur Blattspitze (12) hin eine Öffnung (26) aufweist, die zur Blattspitze (12) hinzeigt und als Düse (27) ausgebildet ist.

2. Rotorblatt (10) nach Anspruch 1, **dadurch gekennzeichnet, dass** ein geschlossener Luftstrom (24, 24') vorgesehen ist.

3. Rotorblatt (10) nach Anspruch 1 oder 2, **dadurch gekennzeichnet, dass** der wärmeisolierte Kanal (18) sich in Richtung der Blattspitze (12) verjüngt.

4. Rotorblatt (10) nach einem der Ansprüche 1 bis 3, **dadurch gekennzeichnet, dass** der erste Bereich (19) als Vorderkasten ausgebildet ist.

5. Rotorblatt (10) nach einem der Ansprüche 1 bis 4, **dadurch gekennzeichnet, dass** im ersten Bereich (19) eine Luftstromleitvorrichtung (29) vorgesehen ist, die den Luftstrom (24, 24') an der Rotorblattnase (15) entlang in Richtung der Blattwurzel(11) leitet.

6. Eine Windenergieanlage mit einem Rotorblatt (10) nach einem der Ansprüche 1 bis 5.

7. Windenergieanlage nach Anspruch 6, **dadurch gekennzeichnet, dass** eine Lufterwärmungsvorrichtung (22) im Bereich einer Maschinengondel, einer Rotornabe oder der Blattwurzel (11) vorgesehen ist.

8. Verfahren zum Enteisen eines Rotorblattes (10) einer Windenergieanlage mit den folgenden Verfahrensschritten:
Führen eines erwärmten Luftstroms (24) von einer Blattwurzel (11) des Rotorblattes (10) in Richtung einer Blattspitze (12), wobei
der erwärmte Luftstrom (24) in einem wärmeisolierten Kanal (18), der an einem Steg (13) angeordnet ist, geführt wird, wobei der Steg (13) einen ersten Bereich (19) des Rotorblattes (10) umfassend eine Rotorblattnase (15) zu einem zweiten Bereich (20) umfassend eine Rotorblatthinterkante (16) abgrenzt, wobei
der erwärmte Luftstrom (24) wenigstens teilweise auf dem Weg zur Blattspitze (12) aus dem Kanal (18) abgezweigt wird und in Richtung der Rotorblattnase (15) geführt wird, und
anschließend der abgezweigte Luftstrom (24) in einem Hohlraum (31), der zwischen der Rotorblattnase (15)und dem Steg (13) sowie dem Kanal (18) vorgesehen ist, zurück zur Blattwurzel (11) geführt wird,
wobei der abgezweigte Luftstrom (24) an der Innenwand (32) der Rotorblattnase (15) zur Blattwurzel (11) zurückgeführt wird, und unter Nutzung eines Düseneffekts die Geschwindigkeit des Luftstroms (24) beim Abzweigen aus dem Kanal (18) erhöht wird, um den Luftstrom (24) unmittelbar an die Innenwand (32) der Rotorblattnase (15) zu leiten, und
ein Teil des erwärmten Luftstroms (24) auf die Innenwand (33) der Blattspitze (12) gerichtet ist und anschließend in dem Hohlraum (31) an der Rotorblattnase (15) zur Blattwurzel (11) zurückgeführt wird.

9. Verfahren nach Anspruch 8, **dadurch gekennzeichnet, dass** ein geschlossener Luftstromkreislauf vorgesehen ist.

10. Verfahren nach Anspruch 8 oder 9, **dadurch gekennzeichnet, dass** nur ein Bereich von 40% bis 100%, insbesondere 50% bis 95%, der Rotorblattlänge gemessen von der Blattwurzel (11) bis zur Blattspitze (12) mit dem erwärmten Luftstrom (24) unmittelbar aus dem Kanal (18) beaufschlagt wird.

11. Verfahren nach einem der Ansprüche 8 bis 10, **dadurch gekennzeichnet, dass** nur bei einem Rotorblatt (10) das Verfahren zum Enteisen durchgeführt wird, das so am Rotor angeordnet ist, dass kein weiteres Rotorblatt (10) unterhalb des zu enteisenden Rotorblattes (10) angeordnet ist, wobei insbesondere zum Enteisen eine Rotorblatthinterkante (16) in Richtung gegen den einfallenden Wind gestellt ist oder wird.

## Claims

1. A rotor blade (10) of a wind energy installation, wherein the rotor blade (10) extends from a blade root (11) to a blade tip (12) and comprises a cavity (31) in which a web (13) is arranged in the direction of the longitudinal extent of the rotor blade (10), wherein the web (13) separates a first region (19) of the rotor blade (10) comprising a rotor blade nose (15) from a second region (20) of the rotor blade (10) comprising a rotor blade trailing edge (16), **characterised in that** a thermally insulated channel (18) is arranged in the first region (19) of the rotor blade (10) on the web (13) in order to guide warm air (24) in an air flow (24, 24') in the direction of the blade tip (12), wherein openings (26) are provided in the channel (18), which are constructed in such a way that they guide the warm air (24) to the rotor blade nose (15), wherein a return of the warm air to the blade root (11) in the first region (19) of the rotor blade (10) takes place, wherein the openings (26) in the channel (18) are constructed as nozzles, and wherein the thermally insulated channel (18) has an opening (26) at its end towards the blade tip (12), which opening (26) points towards the blade tip (12) and is constructed as a nozzle (27).

2. The rotor blade (10) according to claim 1, **characterised in that** provision is made for a closed air flow (24, 24').

3. The rotor blade (10) according to claim 1 or 2, **characterised in that** the thermally insulated channel (18) tapers in the direction of the blade tip (12).

4. The rotor blade (10) according to any one of the claims 1 to 3, **characterised in that** the first region (19) is constructed as a front box.

5. The rotor blade (10) according to any one of the claims 1 to 4, **characterised in that** an air flow guiding device (29) is provided in the first region (19), which air flow guiding device (29) guides the air flow (24, 24') along the rotor blade nose (15) in the direction of the blade root (11).

6. A wind energy installation with a rotor blade (10) according to any one of the claims 1 to 5.

7. The wind energy installation according to claim 6, **characterised in that** an air heating device (22) is provided in the region of a nacelle, a rotor hub or the blade root (11).

8. A method of de-icing a rotor blade (10) of a wind energy installation, wherein the method comprises the following method steps:
guiding a heated air flow (24) from a blade root (11) of the rotor blade (10) in the direction of a blade tip (12), wherein
the heated air flow (24) is guided in a thermally insulated channel (18) which is arranged on a web (13), wherein the web (13) delimits a first region (19) of the rotor blade (10) comprising a rotor blade nose (15) from a second region (20) comprising a rotor blade trailing edge (16), wherein
the heated air flow (24), on the way to the blade tip (12), is at least partially diverted from the channel (18) and is guided in the direction of the rotor blade nose (15), and
the diverted air flow (24) is then guided back to the blade root (11) in a cavity (31) which is provided between the rotor blade nose (15) and the web (13) as well as the channel (18),
wherein the diverted air flow (24) is guided back to the blade root (11) at the inner wall (32) of the rotor blade nose (15), and the velocity of the air flow (24) is increased in the course of the diverting out of the channel (18) using a nozzle effect in order to direct the air flow (24) directly to the inner wall (32) of the rotor blade nose (15), and
a portion of the heated air flow (24) is directed towards the inner wall (33) of the blade tip (12) and is subsequently guided back to the blade root (11) in the cavity (31) at the rotor blade nose (15).

9. The method according to claim 8, **characterised in that** provision is made for a closed air flow circuit.

10. The method according to claim 8 or 9, **characterised in that** only a range of 40% to 100%, in particular 50% to 95%, of the rotor blade length measured from the blade root (11) to the blade tip (12) is subjected to the heated air flow (24) directly from the channel (18).

11. The method according to any one of the claims 8 to 10, **characterised in that** the method of de-icing is carried out only in the case of one rotor blade (10), which is arranged on the rotor in such a way that there is no further rotor blade (10) arranged below the rotor blade (10) to be de-iced, in particular wherein, for de-icing, a rotor blade trailing edge (16) is positioned or adjusted into the direction facing the incident wind.

## Revendications

1. Pale de rotor (10) d'une éolienne, dans laquelle la pale de rotor (10) s'étend d'un pied de pale (11) à un bout de pale (12) et présente une cavité (31), dans laquelle une traverse (13) est agencée dans l'extension longitudinale de la pale de rotor (10), dans laquelle la traverse (13) sépare une première zone (19) de la pale de rotor (10) comprenant un bord d'attaque de pale de rotor (15) d'une deuxième zone (20) de la pale de rotor (10) comprenant un bord de fuite de pale de rotor (16), **caractérisée en ce qu'**un canal (18) isolé thermiquement est agencé dans la première zone (19) de la pale de rotor (10) sur la traverse (13) afin de conduire dans un flux d'air (24, 24') l'air chaud (24) en direction du bout de pale (12), dans laquelle des ouvertures (26) sont prévues dans le canal (18), qui sont réalisées de manière à guider l'air chaud (24) vers le bord d'attaque de pale de rotor (15), dans laquelle un retour de l'air chaud vers le pied de pale (11) a lieu dans la première zone (19) de la pale de rotor (10), dans laquelle les ouvertures (26) dans le canal (18) sont réalisées en tant que buses, et dans laquelle le canal (18) isolé thermiquement présente à son extrémité vers le bout de pale (12) une ouverture (26), qui pointe vers le bout de pale (12) et est réalisée en tant que buse (27).

2. Pale de rotor (10) selon la revendication 1, **caractérisée en ce qu'**un flux d'air (24, 24') fermé est prévu.

3. Pale de rotor (10) selon la revendication 1 ou 2, **caractérisée en ce que** le canal (18) isolé thermiquement se rétrécit en direction du bout de pale (12).

4. Pale de rotor (10) selon l'une quelconque des revendications 1 à 3, **caractérisée en ce que** la première zone (19) est réalisée en tant que caisson avant.

5. Pale de rotor (10) selon l'une quelconque des revendications 1 à 4, **caractérisée en ce que** dans la première zone (19) un dispositif de guidage de flux d'air (29) est prévu, qui guide le flux d'air (24, 24') le long du bord d'attaque de pale de rotor (15) en direction du pied de pale (11).

6. Éolienne avec une pale de rotor (10) selon l'une quelconque des revendications 1 à 5.

7. Éolienne selon la revendication 6, **caractérisée en ce qu'**un dispositif de chauffage d'air (22) est prévu dans la zone d'une nacelle, d'un moyeu de rotor ou du pied de pale (11).

8. Procédé de dégivrage d'une pale de rotor (10) d'une éolienne avec les étapes de procédé suivantes :
conduite d'un flux d'air (24) chauffé d'un pied de pale (11) de la pale de rotor (10) en direction d'un bout de pale (12), dans lequel
le flux d'air (24) chauffé est conduit dans un canal (18) isolé thermiquement, qui est agencé au niveau d'une traverse (13), dans lequel la traverse (13) délimite une première zone (19) de la pale de rotor (10) comprenant un bord d'attaque de pale de rotor (15) d'une deuxième zone (20) comprenant un bord de fuite de pale de rotor (16), dans lequel
le flux d'air (24) chauffé est dérivé au moins en partie sur le chemin du bout de pale (12) depuis le canal (18) et est conduit en direction du bord d'attaque de pale de rotor (15), et
ensuite le flux d'air (24) dérivé est ramené au pied de pale (11) dans une cavité (31), qui est prévue entre le bord d'attaque de pale de rotor (15) et la traverse (13) ainsi que le canal (18),
dans lequel le flux d'air (24) dérivé est ramené au pied de pale (11) au niveau de la paroi intérieure (32) du bord d'attaque de pale de rotor (15), et en utilisant un effet de buse, la vitesse du flux d'air (24) est augmentée lors de la dérivation du canal (18) afin de guider le flux d'air (24) directement à la paroi intérieure (32) du bord d'attaque de pale de rotor (15), et
une partie du flux d'air (24) chauffé est dirigée sur la paroi intérieure (33) du bout de pale (12) et est ensuite ramenée au pied de pale (11) dans la cavité (31) au niveau du bord d'attaque de pale de rotor (15).

9. Procédé selon la revendication 8, **caractérisé en ce qu'**un circuit de flux d'air fermé est prévu.

10. Procédé selon la revendication 8 ou 9, **caractérisé en ce que** seule une plage de 40 % à 100 %, en particulier de 50 % à 95 %, de la longueur de pale de rotor mesurée du pied de pale (11) au bout de pale (12) est sollicitée avec le flux d'air (24) chauffé directement du canal (18).

11. Procédé selon l'une quelconque des revendications 8 à 10, **caractérisé en ce que** le procédé de dégivrage n'est réalisé que pour une pale de rotor (10), qui est agencée au niveau du rotor de sorte qu'aucune autre pale de rotor (10) n'est agencée en-dessous de la pale de rotor (10) à dégivrer, dans lequel en particulier pour le dégivrage un bord de fuite de pale de rotor (16) est réglé dans la direction opposée au vent incident.
